# EUROPEAN PATENT SPECIFICATION

(11) **EP 3 417 315 B1**
(45) Date of publication and mention of the grant of the patent: **16.08.2023**
(21) Application number: 17706969.7
(22) Date of filing: 10.02.2017
(51) Int. Cl.: G01S 19/29, G01S 19/30

(54) **RECEIVER FOR SATELLITE NAVIGATION**
EMPFÄNGER ZUR SATELLITENNAVIGATION
RÉCEPTEUR POUR NAVIGATION SATELLITAIRE

(30) Priority: 17.02.2016 EP 16156082
(43) Date of publication of application: 26.12.2018
(73) Proprietor: Septentrio N.V., 3001 Leuven (BE)
(72) Inventor: SALLAERTS, Daniël, B-3200 Aarschot (BE); PAUWELS, Koen, B-3360 Bierbeek (BE); DE WILDE, Wim, B-3050 Oud-Heverlee (BE)
(74) Representative: AWA Benelux
(86) International application number: PCT/EP2017/053069
(87) International publication number: WO 2017/140601

(56) References cited:
- WO-A1-2007/071810
- WO-A2-02/093772
- US-A1- 2003 174 792
- US-A1- 2003 223 477
- US-A1- 2010 295 727
- US-B1- 6 208 291

## Description

### Field of the invention

The present invention is related to satellite navigation and in particular to the acquisition unit of a satellite navigation receiver. It further relates to the use of the receiver.

### State of the art.

Global Navigation Satellite System (GNSS) is a general name for a satellite navigation system. A GNSS system comprises, among other things, a constellation of multiple navigation satellites, which are orbiting the earth and which each transmit dedicated navigation signals also called 'ranging signals'. GNSS reception functionality enables a device to receive, acquire and track the ranging signals of multiple satellites. GNSS signal processing functionality further enables determining geographic positioning of any person, vessel or object equipped with a navigation receiver. All systems built so far work according to the same principle: the signal from at least four satellites is evaluated and the receiver computes its own position.

The operational systems which are best known are the American GPS system and its Russian counterpart, Glonass. The European Galileo and the Chinese Compass are more recent systems.

Each satellite transmits one or more carriers modulated with one or more pseudorandom (PRN) codes. The received signal consists of a Doppler-shifted and time-delayed version of that transmitted signal. Because each navigation satellite has a different velocity and is at a different distance from the receiver, the Doppler shift and the time delay is satellite-dependent.

In the first seconds of operation of a GNSS receiver, the Doppler frequency shifts and delays of the visible satellites are unknown and the main receiver activity is to search the Doppler/delay space for available signals. This phase is referred to as `initial acquisition'. At the end of this phase, the receiver knows (i) which satellites are visible, (ii) at which approximate Doppler frequency and (iii) at which approximate delay.

It is important that the initial acquisition of signals be performed as fast as possible, as it constitutes an important contribution in the so-called `time-to-first-fix', i.e. the time from start-up of the receiver (e.g. after having been in a standby mode) until the first position is available to the user. Upon completion of the initial acquisition, the receiver switches into signal tracking mode, where the Doppler and delay parameters of the signals of each individual satellite are accurately tracked and measured. Signal tracking involves different algorithms than acquisition and must meet very different requirements. In acquisition the focus is set on the speed at which the search space is scanned, whereas in tracking the focus is set on the accuracy of the Doppler and delay estimation.

To enable efficient and fast acquisition of new signals such as Galileo, Glonass or modernized GPS, several techniques have been proposed, mostly relying on the presence of a large number of correlators, usually placed in a dedicated acquisition unit operating independently of the channels. These correlators compute the cross-correlation function between the received satellite signals and a local replica of the PRN code that the receiver is programmed to acquire. The position of the maximum of this cross-correlation function indicates the satellite signal delay.

The core of an acquisition unit of the latter type consists of a set of shift registers, a first shift register receiving sample values of an incoming PRN sequence, a second shift register receiving samples of a known PRN replica. The sampled replica is stored in a buffer memory and then the correlation is calculated between the buffer and progressively shifting versions of the incoming PRN sequence in the first shift register. For each correlation, the results are added up and the sum is stored. The maximum of the sums determines a match between the local replica and the incoming code.
US 6208291 describes a method and apparatus of acquiring and tracking satellite positioning system signals in a highly parallel correlator. A pseudo-random noise correlation operation is performed on an input satellite positioning system signal to provide a correlated output. The input satellite positioning system signal is input in parallel to a number of parallel correlators. Each parallel correlator contains a multi-correlator unit which processes and stores multiple phases of a correlated pseudo-random noise signal using common adder and multiplier circuitry. US 2003/174792 describes a civil moderate (CM) code and a civil long (CL) code that are time division multiplex (TDM) as a combined code having alternating code chips that spectrum spread a transmitted signal. A GPS receiver receives and tracks the TDM spectrum spreading code using a two-level correlator operating with +1 and -1 values to alternately correlate the received CM and CL code chips using a gating signal to gate by time the correlation of the two codes.

A problem with these types of acquisition units is that they are often too slow. Determining which one of a given number of satellites generates an incoming PRN sequence and determining the Doppler shift may take considerable time, as several replicas and several Doppler shifts need to be verified sequentially.

### Summary of the invention

The invention is related to a receiver for satellite navigation as disclosed in claims 1 and 2; the invention further relates to the use the receivers of claims 1 and 2 as stated in claims 8 and 9. The receiver of the invention is equipped with an acquisition unit based on the same principle as described above, i.e. comprising shift registers and correlators, but which is capable of processing several signals simultaneously, so that the acquisition phase may be performed faster than in prior art receivers.

### Brief description of the figures

Figure 1 illustrates the components of an acquisition unit of a receiver according to a first embodiment of the invention.
Figure 2 illustrates the interleaved filling of the second shift register in the embodiment of Figure 1.
Figure 3 illustrates a second embodiment of the invention.
Figure 4 illustrates the interleaved filling of the second shift register in an embodiment wherein two Galileo-type codes are verified simultaneously.
Figure 5 illustrates the interleaved filling of the first shift register in an embodiment wherein two Doppler-shifted Galileo E1B or E1C codes are processed simultaneously.
Figure 6 illustrates the interleaved filling of the second shift register in the same embodiment illustrated by Figure 5.

### Detailed description of the invention

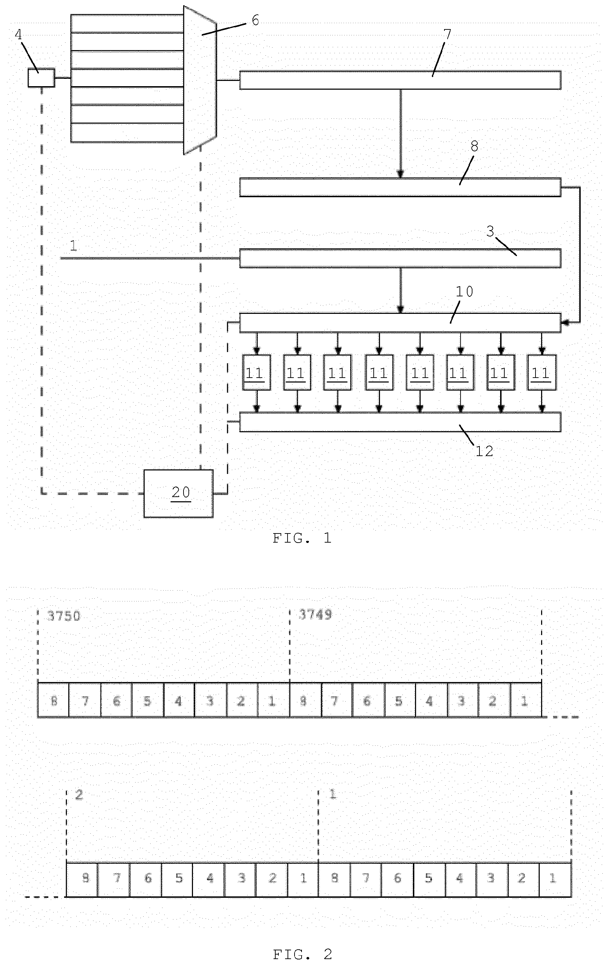

By adding one or more multiplexers to the above-described acquisition unit design, the receiver of the invention makes it possible to compare a received signal to multiple code replicas simultaneously, or to compare multiple Doppler-shifted versions of the same signal to one single code replica. The architecture of the acquisition unit according to a first embodiment of the invention is illustrated in Figure 1. The numerical values cited hereafter are used by way of example only and they do not limit the scope of the invention. A satellite signal is received by an antenna (not shown) and processed by a signal processor (not shown) in order to derive an incoming PRN sequence on line 1. The signal processor required to obtain the PRN sequence is known in the art and not described here in detail. The incoming PRN sequence is a sequence of code chips (0 and 1 or equivalent), at a chipping rate of 1.023MHz (1023 chips per millisecond), transmitted from a satellite that is within range of the receiver. The receiver however doesn't know yet which satellite is transmitting the signal, and must compare several code replicas to the received signal in order to find a match and subsequently track the satellite signal. The incoming signal 1 is a digitized signal, i.e. the analog signal received from the satellite has been treated by one or more A/D converters and possibly conditioned by other analog or digital signal processing tools known to the skilled person, leading to a representation of the incoming PRN signal as a sequence of digital samples at a given sample frequency. In the presently described embodiment, the sample frequency fₛ is 30MHz. The sample frequency is higher than the chipping rate. The sampled values are entered at a given clocking rate into a first shift register 3.

The shift register 3 has 30000 registers. During or prior to the acquisition of the satellite signal, 8 different code replicas stored in the memory of the acquisition unit are generated by a code generator 4 and sampled at the same sampling frequency fₛ, after which the 8 sampled signals are fed in parallel to an 8-1 multiplexer 6. Preferably the sampling and multiplexing of the prestored code replicas takes place completely in the digital domain, as the codes are stored in the form of digital sequences in the memory of the receiver. Such digital (re)sampling and multiplexing is known by the skilled reader and therefore not described here in detail. The meaning of the term 'multiplexer' in the context of this application includes any circuit that establishes the multiplexing function as described hereafter. The output of the multiplexer 6 is fed into a second shift register 7, equally having 30000 registers. The multiplexer thus produces an interleaved stream of samples of the 8 code replicas. When the 30000 registers of the second shift register 7 are filled, they contain 8 times 3750 samples of each code replica, in the manner illustrated in Figure 2. Each group of 8 registers comprises one sample for each of the 8 different PRN codes. The first group of 8 registers (having been filled last) comprises sample n° 3750 of the 8th to the 1st code respectively; the last group of 8 registers (having been filled first) comprises sample n° 1 of the 8th to first code respectively. These 30000 registers are then copied to a buffer 8, and kept there during the rest of the calculation, described hereafter.

The correlation is calculated between the 30000 samples in the buffer 8 and the 30000 samples of the received PRN sequence in the first shift register 3. This is done by a set 10 of 30000 correlators, which are basically XOR circuits, yielding a 1 for matching samples (both 0 or both 1) and a 0 for non-matching samples (0 and 1 or vice versa). After that, there are 8 separate summing circuits 11 connected to the correlators, in a manner to calculate the sum of the correlation values determined for each of the 8 interleaved codes. These sums are stored in a memory 12 having 30000 memory areas. Every clock cycle, this process is repeated with the incoming signal shifted one register in the first shift register 3. So at the end of 30000 clock cycles, the memory 12 is filled with 8 times 3750 correlation sums, and the peak detection is done in every group of 3750 sums, to thereby detect a maximum. The group where a maximum is found indicates a candidate for the correct code. Preferably, the same computation is done several times and the sums or the squares of the sums are accumulated and averaged in the memory 12, before determining the maximum.

A hardware component 20 is referred to as a scheduler and described here by its function only : the scheduler 20 controls the succession of operations described above, as well as the operation of the multiplexer 6 and the memory access. It takes care of resetting, code generation, frequency shifting (see second embodiment) and accumulating periods. Additionally, it signals the end of the computation to an external processor through an interrupt mechanism. The manner in which the scheduler 20 can be brought into practice is not different from presently known receivers and therefore not described here in detail.

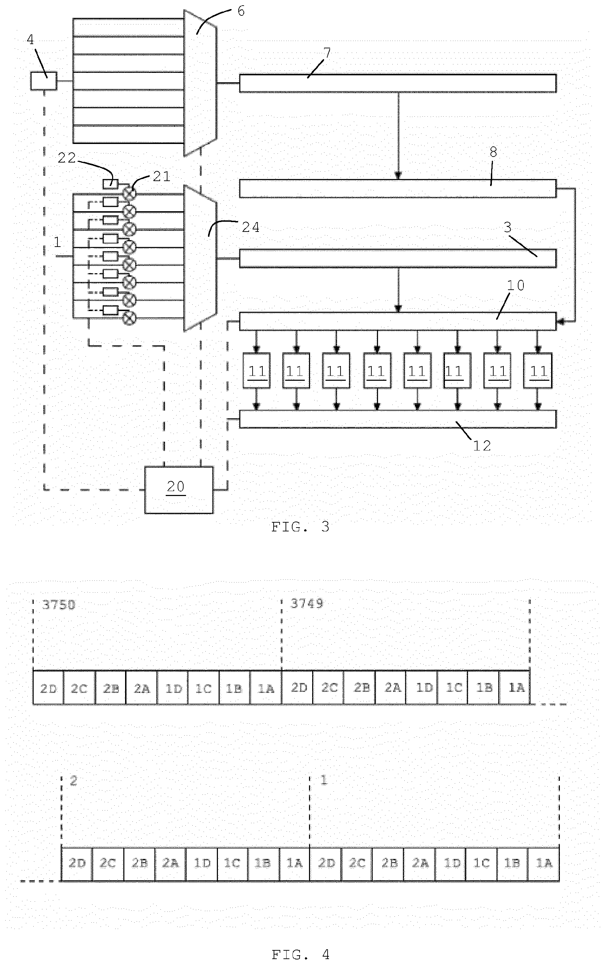

A second embodiment is shown in Figure 3. The incoming PRN sequence on line 1 is coming from a known satellite, i.e. the receiver knows already which pre-defined PRN code, consisting of 1023 chips per millisecond, is received. The Doppler shift is however yet to be determined. To this aim, the incoming signal is split into 8 parallel lines and multiplied 8 times in 8 multipliers 21 with a signal produced by one of 8 numerically controlled oscillators 22. This NCO is a known circuit which multiplies the baseband signal with a locally generated sine and/or cosine pattern of a given frequency shift. Each of the 8 NCOs thus applies a different Doppler correction to the incoming signal. In this manner, 8 versions of the incoming signal are produced in parallel, each with a different Doppler shift. These 8 versions are sampled at a sampling frequency fs of 30MHz, and fed into an 8-1 multiplexer 24. In the same manner as described above, an interleaved stream of the 8 PRN sequences is produced by the multiplexer 24 and fed into the first shift register 3.

The known code replica is produced 8 times by the code generator 4, each version is sampled at 30MHz and fed to the 8-1 multiplexer 6, which feeds an interleaved stream of 8 times the same PRN code (namely the code of the known satellite transmitting the PRN sequence) into the second shift register 7. This interleaved stream is stored in the buffer memory 8 and the correlation is calculated in correlators 10 between the buffer and the 8 interleaved differential Doppler-shifted signals in the first shift register 3. In the same way as described above for the first embodiment, the correlation values are summed 8 times in separate summing circuits 11 and these sums are stored in memory 12. Detection of the maximum in the same manner as in the first embodiment reveals candidates for the correct Doppler shift. The scheduler performs the above-described function, and also the function of controlling the second multiplexer 24.

The architecture of Figure 1 can also be used to verify two Galileo PRN codes of the type E1B or E1C. These Galileo codes consist of 4092 chips at a chipping rate of 1.023MHz. The code may thus be divided into 4 different blocks A through D of 1023 chips. In a receiver of the invention, the second shift register 7 may be filled with two of these codes in an interleaved way, in the manner illustrated in Figure 4. In the figure, '1A' means 'a sample of block A of the first code', while '2A' means 'a sample of block A of the second code'. The correlation with the incoming signal, the summing and the maximum detection takes place in the same way as explained above in relation to Figure 1.

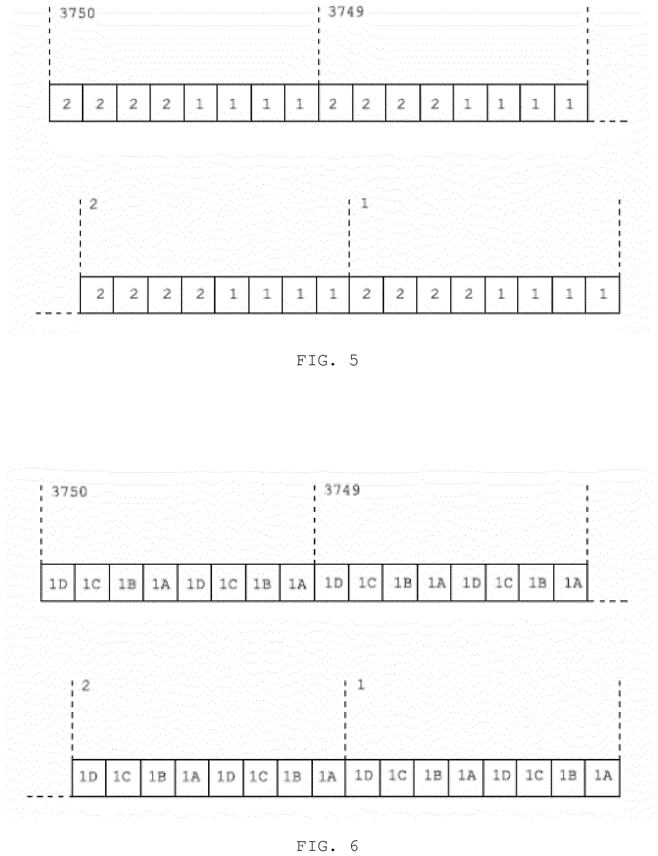

Likewise, the receiver of Figure 3 may be used to compare two Doppler-shifted versions of an incoming Galileo E1B or E1C PRN signal to a single code replica, by sampling the outputs of two of the input multipliers 21, each controlled to have a different frequency shift by the corresponding NCO 22. The output of the two multipliers is fed to the first two inputs of the multiplexer 24, leading to an interleaved sequence as shown in Figure 5 being entered in the first shift register 3. In figure 5, each '1' is a sample of the first PRN signal, and each '2' is a sample of the second PRN signal. A single E1B or E1C code replica is generated 2 times as 4 blocks of 1023 chips, and the resulting 8 blocks are sampled and entered into multiplexer 6 which leads to the sequence of Figure 6 being fed to the second shift register 7. The correlation, summing and maximum detection is done in the same way as described above.

According to an embodiment, the incoming signal 1 comprises complex values (0,0), (1,0) (0,1) or (1,1), for example the I and Q values of the incoming signal. In this case, the first shift register 3 comprises 30000 double registers (each register capable of containing two real values), and the correlations are calculated and summed for the I and Q values separately. The sum of the squares of the summed I and Q values is then preferably calculated and accumulated and the maximum of this sum of squared values, effectively representing the average energy, is detected.

As stated above, the multiplexing functions of the multiplexers 6 and 24 are controlled by the scheduler 20. In a preferred embodiment, the scheduler 20 controls how many of the input channels of the multiplexers are active. For example if only one channel is active, this is equivalent to turning off the multiplexing function altogether. In the embodiment illustrated in Figure 5, only two channels of multiplexer 24 are active. This makes the architecture of Figure 3 capable of performing all of the above-described calculations. Figure 3 thus represents the architecture of an acquisition unit of a receiver according to the preferred embodiment of the invention. In this architecture it is also possible to process 8 different Doppler-shifted signals and 8 different code replica's simultaneously by actively using both multiplexers 6 and 24.

In the latter case, but also in other modes of operation, it may be required or preferable to select one or more subgroups of the 30000 sums stored in memory 12 and to perform the maximum detection only on these subgroups. The scheduler 20 is therefore preferably configured to be able to select specific subgroups from the memory 12.

Another embodiment comprises only the multiplexer 24 and not the multiplexer 6, with all other components being the same as in Figures 1 and 3. This embodiment is capable of acquiring 8 Doppler-shifted versions of an incoming PRN sequence and correlating these versions with a single sampled PRN replica, the PRN replica being sampled at 30MHz, like the incoming Doppler-shifted versions. The correlation and summing operations and the determination of the maximum is done in the same way as in the above-described embodiments.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A receiver for satellite navigation comprising .
• an antenna for capturing a satellite signal,
• a signal processor configured to derive from the satellite signal a pseudorandom (PRN) sequence of code chips, at a chipping frequency f₀,
• a converter configured to produce a digitized version of the PRN sequence in the form of a sequence of samples at a sampling frequency fₛ, wherein the sampling frequency fₛ is higher than the chipping frequency f₀,
• a first shift register (3) configured to receive the sequence of samples,
• a code generator (4) configured to generate replicas of multiple pre-defined PRN codes, the replicas having the form of sequences of samples at the sampling frequency fₛ,
• a second shift register (7) for receiving sampled values of a PRN replica sequence,
• the receiver comprises a multiplexer (6) configured to transform the sequences of samples of the replicas into an interleaved sequence and to enter said interleaved sequence into the second shift register (7),
• a set of correlators (10) configured to determine a correlation value between the sequences of samples of the interleaved sequence in the second shift register (7) and the sequence of samples in the first shift register (3) for the replicas of the interleaved sequence,
• a summing circuitry comprising multiple summing circuits (11) each configured to separately summing correlation values related to a respective one of the replicas of the interleaved sequence,
• circuitry for determining a maximum of the summed correlation values to thereby determine a match between the PRN sequence and one of the replicas, wherein the circuitry for determining a maximum is configured to determine the maximum in one or more subgroups of sums determined by the multiple summing circuits (11), and
• a scheduler (20) for controlling at least the operation of the code generator (4), the shift registers (3,7), the correlators (10) the summing circuitry (11) and the circuitry for determining a maximum.

2. A receiver for satellite navigation comprising :
• an antenna for capturing a satellite signal,
• a signal processor configured to derive from the satellite signal a pseudorandom (PRN) sequence of code chips, at a chipping frequency f₀,
• a converter configured to produce a digitized version of the PRN sequence in the form of a sequence of samples at a sampling frequency fₛ, wherein the sampling frequency fₛ is higher than the chipping frequency f₀,
• circuitry configured to duplicating the PRN sequence on a plurality of parallel lines,
• a multiplier (21) and a numerically controlled oscillator (22) provided in relation to each of the plurality of said parallel lines, configured to applying a different frequency shift to a plurality of duplicates of the PRN sequence on the plurality of parallel lines,
• a first shift register (3),
• a multiplexer (24) configured to transform said plurality of frequency-shifted duplicates into an interleaved sequence and to enter said interleaved sequence into the first shift register (3),
• a code generator (4) configured to generate a replica of a pre-defined PRN code, the replica having the form of a sequence of samples at the sampling frequency fₛ,
• a second shift register (7) configured to receive the samples of the replica,
• a set of correlators (10) configured to determine a correlation value between the sequence of samples of the replica in the second shift register (7) and the interleaved sequence in the first shift register (3),
• a summing circuitry comprising multiple summing circuits (11) each configured to separately summing correlation values related to a respective one of the frequency-shifted duplicates of the interleaved sequence,
• circuitry for determining a maximum of the summed correlation values to thereby determine a match between one of the frequency-shifted duplicates and the replica, wherein the circuitry for determining a maximum is configured to determine the maximum in one or more subgroups of sums determined by the multiple summing circuits (11), and
• a scheduler (20) for controlling at least the operation of the code generator (4), the shift registers (3,7), the correlators (10) the summing circuitry (11) and the circuitry for determining a maximum.

3. The receiver according to claim 2, comprising a multiplexer (6) configured to transform multiple copies of the replica into an interleaved sequence, and to enter said interleaved sequence into the second shift register (7).

4. The receiver according to any one of the preceding claims, wherein the scheduler (20) is configured to control the operation of the multiplexer or multiplexers (6,24), in such a way that the scheduler is capable of the number of input channels of the multiplexer that are activated.

5. The receiver according to any one of the preceding claims, wherein the PRN sequence and the replica or replicas comprise 1023 chips per millisecond.

6. The receiver according to claim 5 wherein the PRN sequence and the replica or replicas comprise 4092 chips per 4 milliseconds, and wherein the 4092 chips are divided in 4 groups of 1023 chips, and wherein the four groups of a replica are transformed into an interleaved sequence.

7. The receiver according to any one of the preceding claims, wherein the multiplexer (6, 24) is an 8-1 multiplexer.

8. Use of a receiver according to any one of the preceding claims, for acquiring PRN signals comprising 1023 chips per millisecond.

9. Use of a receiver according to any one of claims 1 to 7 for acquiring PRN signals comprising 4092 chips per 4 milliseconds, and wherein the PRN replicas of these signals are divided into four blocks of 1023 chips, and wherein the four blocks are transformed into an interleaved sequence.

## Patentansprüche

1. Ein Empfänger zur Satellitennavigation, umfassend:
• eine Antenne zum Erfassen eines Satellitensignals,
• einen Signalprozessor, der dazu gestaltet ist, aus dem Satellitensignal eine pseudozufällige (PRN) Sequenz von Codechips mit einer Chipping-Frequenz f₀ abzuleiten,
• einen Wandler, der dazu gestaltet ist, eine digitalisierte Version der PRN-Sequenz in Form einer Sequenz von Abtastungen mit einer Abtastfrequenz fₛ zu erzeugen, wobei die Abtastfrequenz fₛ höher ist als die Chipping-Frequenz f₀,
• ein erstes Schieberegister (3), das dazu gestaltet ist, die Sequenz von Abtastungen zu empfangen,
• einen Code-Generator (4), der dazu gestaltet ist, Kopien mehrerer vordefinierter PRN-Codes zu erzeugen, wobei die Kopien die Form von Sequenzen von Abtastungen mit der Abtastfrequenz fₛ aufweisen,
• ein zweites Schieberegister (7) zum Empfangen abgetasteter Werte einer Sequenz von PRN-Kopien,
• der Empfänger einen Multplexer (6) umfasst, der dazu gestaltet ist, die Sequenzen von Abtastungen der Kopien in eine verschachtelte Sequenz umzuwandeln und die besagte verschachtelte Sequenz in das zweite Schieberegister (7) einzugeben,
• einen Satz von Korrelatoren (10), der dazu gestaltet ist, einen Korrelationswert zwischen den Sequenzen von Abtastungen der verschachtelten Sequenz in dem zweiten Schieberegister (7) und der Sequenz von Abtastungen in dem ersten Schieberegister (3) für die Kopien der verschachtelten Sequenz zu bestimmen,
• eine Summierungsschaltung, die mehrere Summierungsschaltkreise (11) umfasst, die jeweils dazu gestaltet sind, Korrelationswerte, die sich auf eine jeweilige der Kopien der verschachtelten Sequenz beziehen, separat zu summieren,
• eine Schaltung zum Bestimmen eines Maximums der summierten Korrelationswerte, um dadurch eine Übereinstimmung zwischen der PRN-Sequenz und einer der Kopien zu bestimmen, wobei die Schaltung zum Bestimmen eines Maximums dazu gestaltet ist, das Maximum in einer oder mehreren Untergruppen von Summen, die durch die mehreren Summierungsschaltkreise (11) bestimmt werden, zu bestimmen und
• einen Planer (20) zum Steuern mindestens des Betriebs des Code-Generators (4), der Schieberegister (3, 7), der Korrelatoren (10), der Summierungsschaltung (11) und der Schaltung zum Bestimmen eines Maximums.

2. Ein Empfänger zur Satellitennavigation, umfassend:
• eine Antenne zum Erfassen eines Satellitensignals,
• einen Signalprozessor, der dazu gestaltet ist, aus dem Satellitensignal eine pseudozufällige (PRN) Sequenz von Codechips mit einer Chipping-Frequenz f₀ abzuleiten,
• einen Wandler, der dazu gestaltet ist, eine digitalisierte Version der PRN-Sequenz in Form einer Sequenz von Abtastungen mit einer Abtastfrequenz fₛ zu erzeugen, wobei die Abtastfrequenz fₛ höher ist als die Chipping-Frequenz f₀,
• eine Schaltung, die dazu gestaltet ist, die PRN-Sequenz auf einer Vielzahl von parallelen Leitungen zu duplizieren,
• einen Vervielfacher (21) und einen numerisch gesteuerten Oszillator (22), die in Bezug auf jede der Vielzahl von besagten parallelen Leitungen bereitgestellt und dazu gestaltet sind, eine andere Frequenzverschiebung auf eine Vielzahl von Duplikaten der PRN-Sequenz auf der Vielzahl von parallelen Leitungen anzuwenden,
• ein erstes Schieberegister (3),
• einen Multiplexer (24), der dazu gestaltet ist, die besagte Vielzahl von frequenzverschobenen Duplikaten in eine verschachtelte Sequenz umzuwandeln und die besagte verschachtelte Sequenz in das erste Schieberegister (3) einzugeben,
• einen Code-Generator (4), der dazu gestaltet ist, eine Kopie eines vordefinierten PRN-Codes zu erzeugen, wobei die Kopie die Form einer Sequenz von Abtastungen mit der Abtastfrequenz fₛ aufweist,
• ein zweites Schieberegister (7), das dazu gestaltet ist, die Abtastungen der Kopie zu empfangen,
• einen Satz von Korrelatoren (10), der dazu gestaltet ist, einen Korrelationswert zwischen der Sequenz von Abtastungen der Kopie in dem zweiten Schieberegister (7) und der verschachtelten Sequenz in dem ersten Schieberegister (3) zu bestimmen,
• eine Summierungsschaltung, die mehrere Summierungsschaltkreise (11) umfasst, die jeweils dazu gestaltet sind, Korrelationswerte, die sich auf eine jeweilige der frequenzverschobenen Duplikate der verschachtelten Sequenz beziehen, separat zu summieren,
• eine Schaltung zum Bestimmen eines Maximums der summierten Korrelationswerte, um dadurch eine Übereinstimmung zwischen einem der frequenzverschobenen Duplikate und der Kopie zu bestimmen, wobei die Schaltung zum Bestimmen eines Maximums dazu gestaltet ist, das Maximum in einer oder mehreren Untergruppen von Summen, die durch die mehreren Summierungsschaltkreise (11) bestimmt werden, zu bestimmen und
• einen Planer (20) zum Steuern mindestens des Betriebs des Code-Generators (4), der Schieberegister (3, 7), der Korrelatoren (10), der Summierungsschaltung (11) und der Schaltung zum Bestimmen eines Maximums.

3. Der Empfänger nach Anspruch 2, einen Multiplexer (6) umfassend, der dazu gestaltet ist, mehrere Exemplare der Kopie in eine verschachtelte Sequenz umzuwandeln und die besagte verschachtelte Sequenz in das zweite Schieberegister (7) einzugeben.

4. Der Empfänger nach irgendeinem der vorhergehenden Ansprüche, wobei der Planer (20) dazu gestaltet ist, den Betrieb des Multiplexers oder der Multiplexer (6, 24) derart zu steuern, dass der Planer zu der Anzahl von Eingangskanälen des Multiplexers, die aktiviert werden, fähig ist.

5. Der Empfänger nach irgendeinem der vorhergehenden Ansprüche, wobei die PRN-Sequenz und die Kopie oder Kopien 1023 Chips pro Millisekunde umfassen.

6. Der Empfänger nach Anspruch 5, wobei die PRN-Sequenz und die Kopie oder Kopien 4092 Chips pro 4 Millisekunden umfassen und wobei die 4092 Chips in 4 Gruppen zu 1023 Chips unterteilt sind und wobei die vier Gruppen einer Kopie in eine verschachtelte Sequenz umgewandelt werden.

7. Der Empfänger nach irgendeinem der vorhergehenden Ansprüche, wobei der Multiplexer (6, 24) ein 8-1-Multiplexer ist.

8. Verwendung eines Empfängers nach irgendeinem der vorhergehenden Ansprüche zum Erfassen von PRN-Signalen, die 1023 Chips pro Millisekunde umfassen.

9. Verwendung eines Empfängers nach irgendeinem der Ansprüche 1 bis 7 zum Erfassen von PRN-Signalen, die 4092 Chips pro 4 Millisekunden umfassen, und wobei die PRN-Kopien dieser Signale in vier Blöcke zu 1023 Chips unterteilt sind und wobei die vier Blöcke in eine verschachtelte Sequenz umgewandelt werden.

## Revendications

1. Récepteur de navigation par satellite, comprenant :
• une antenne pour capturer un signal satellite ;
• un processeur de signal configuré de manière à dériver, du signal satellite, une séquence pseudo-aléatoire (PRN) de puces de code, à une fréquence de découpage f₀ ;
• un convertisseur configuré de manière à produire une version numérisée de la séquence PRN sous la forme d'une séquence d'échantillons à une fréquence d'échantillonnage fₛ, dans lequel la fréquence d'échantillonnage fₛ est supérieure à la fréquence de découpage f₀ ;
• un premier registre à décalage (3) configuré de manière à recevoir la séquence d'échantillons ;
• un générateur de code (4) configuré de manière à générer des répliques de multiples codes PRN prédéfinis, les répliques ayant la forme de séquences d'échantillons à la fréquence d'échantillonnage fₛ ;
• un second registre à décalage (7) destiné à recevoir des valeurs échantillonnées d'une séquence de répliques PRN ;
• dans lequel le récepteur comprend un multiplexeur (6) configuré de manière à transformer les séquences d'échantillons des répliques en une séquence entrelacée et à entrer ladite séquence entrelacée dans le second registre à décalage (7) ;
• un ensemble de corrélateurs (10) configuré de manière à déterminer une valeur de corrélation entre les séquences d'échantillons de la séquence entrelacée dans le second registre à décalage (7) et la séquence d'échantillons dans le premier registre à décalage (3) pour les répliques de la séquence entrelacée ;
• un montage de circuits de sommation comprenant de multiples circuits de sommation (11) configurés chacun de manière à sommer séparément des valeurs de corrélation connexes à une réplique respective des répliques de la séquence entrelacée ;
• un montage de circuits pour déterminer un maximum des valeurs de corrélation sommées afin de déterminer par conséquent une correspondance entre la séquence PRN et l'une des répliques, dans lequel le montage de circuits pour déterminer un maximum est configuré de manière à déterminer le maximum dans un ou plusieurs sous-groupes de sommes déterminées par les multiples circuits de sommation (11) ; et
• un ordonnanceur (20) pour commander au moins le fonctionnement du générateur de code (4), des registres à décalage (3, 7), des corrélateurs (10), du montage de circuits de sommation (11) et du montage de circuits pour déterminer un maximum.

2. Récepteur de navigation par satellite, comprenant :
• une antenne pour capturer un signal satellite ;
• un processeur de signal configuré de manière à dériver, du signal satellite, une séquence pseudo-aléatoire (PRN) de puces de code, à une fréquence de découpage f₀ ;
• un convertisseur configuré de manière à produire une version numérisée de la séquence PRN sous la forme d'une séquence d'échantillons à une fréquence d'échantillonnage fₛ, dans laquelle la fréquence d'échantillonnage fₛ est supérieure à la fréquence de découpage f₀ ;
• un montage de circuits configuré de manière à dupliquer la séquence PRN sur une pluralité de lignes parallèles ;
• un multiplicateur (21) et un oscillateur à commande numérique (22) fournis en relation avec chacune de la pluralité desdites lignes parallèles, configurés de manière à appliquer un décalage de fréquence différent à une pluralité de doublons de la séquence PRN sur la pluralité de lignes parallèles ;
• un premier registre à décalage (3) ;
• un multiplexeur (24) configuré de manière à transformer ladite pluralité de doublons décalés en fréquence en une séquence entrelacée et à entrer ladite séquence entrelacée dans le premier registre à décalage (3) ;
• un générateur de code (4) configuré de manière à générer une réplique d'un code PRN prédéfini, la réplique ayant la forme d'une séquence d'échantillons à la fréquence d'échantillonnage fₛ ;
• un second registre à décalage (7) configuré de manière à recevoir les échantillons de la réplique ;
• un ensemble de corrélateurs (10) configuré de manière à déterminer une valeur de corrélation entre la séquence d'échantillons de la réplique dans le second registre à décalage (7) et la séquence entrelacée dans le premier registre à décalage (3) ;
• un montage de circuits de sommation comprenant de multiples circuits de sommation (11) configurés chacun de manière à sommer séparément les valeurs de corrélation connexes à un doublon respectif des doublons décalés en fréquence de la séquence entrelacée ;
• un montage de circuits pour déterminer un maximum des valeurs de corrélation sommées afin de déterminer par conséquent une correspondance entre l'un des doublons décalés en fréquence et la réplique, dans lequel le montage de circuits pour déterminer un maximum est configuré de manière à déterminer le maximum dans un ou plusieurs sous-groupes de sommes déterminées par les multiples circuits de sommation (11) ; et
• un ordonnanceur (20) pour commander au moins le fonctionnement du générateur de code (4), des registres à décalage (3, 7), des corrélateurs (10), du montage de circuits de sommation (11) et du montage de circuits pour déterminer un maximum.

3. Récepteur selon la revendication 2, comprenant un multiplexeur (6) configuré de manière à transformer de multiples copies de la réplique en une séquence entrelacée, et à entrer ladite séquence entrelacée dans le second registre à décalage (7).

4. Récepteur selon l'une quelconque des revendications précédentes, dans lequel l'ordonnanceur (20) est configuré de manière à commander le fonctionnement du multiplexeur ou des multiplexeurs (6, 24), de sorte que l'ordonnanceur est en mesure de commander le nombre de canaux d'entrée du multiplexeur qui sont activés.

5. Récepteur selon l'une quelconque des revendications précédentes, dans lequel la séquence PRN et la réplique ou les répliques comprennent 1023 puces par milliseconde.

6. Récepteur selon la revendication 5, dans lequel la séquence PRN et la réplique ou les répliques comprennent 4092 puces par 4 millisecondes, et dans lequel les 4092 puces sont divisées en 4 groupes de 1023 puces, et dans lequel les quatre groupes d'une réplique sont transformés en une séquence entrelacée.

7. Récepteur selon l'une quelconque des revendications précédentes, dans lequel le multiplexeur (6, 24) est un multiplexeur de type « 8 à 1 ».

8. Utilisation d'un récepteur selon l'une quelconque des revendications précédentes, pour acquérir des signaux PRN comprenant 1023 puces par milliseconde.

9. Utilisation d'un récepteur selon l'une quelconque des revendications 1 à 7 pour acquérir des signaux PRN comprenant 4092 puces par 4 millisecondes, et dans lequel les répliques PRN de ces signaux sont divisées en quatre blocs de 1023 puces, et dans lequel les quatre blocs sont transformés en une séquence entrelacée.
